# EUROPÄISCHE PATENTSCHRIFT

(11) **EP 1 892 151 B1**
(45) Veröffentlichungstag und Bekanntmachung des Hinweises auf die Patenterteilung: **09.03.2011**
(21) Anmeldenummer: 07016331.6
(22) Anmeldetag: 21.08.2007
(51) Int. Cl.: B60R 3/02

(54) **Schiebetritt zum Einbau in ein Fahrzeug des öffentlichen Personenverkehrs mit einer geneigten Fußbodenfläche**
Retractable step for installing in a public transport vehicle with an angled floor surface
Pédale coulissante pour l'intégration dans un véhicule de transport public doté d'un revêtement de sol approprié

(30) Priorität: 25.08.2006 DE 202006013126 U
(43) Veröffentlichungstag der Anmeldung: 27.02.2008
(73) Patentinhaber: Gebr. Bode GmbH & Co. KG, 34123 Kassel (DE)
(72) Erfinder: Winterfeld, Dirk, 34128 Kassel (DE)
(74) Vertreter: Bauer Vorberg Kayser Patentanwälte

(56) Entgegenhaltungen:
- EP-A- 0 118 923
- WO-A-2005/030551
- BE-A3- 1 007 255
- DE-A1- 19 928 571

## Beschreibung

Die Erfindung betrifft einen Schiebetritt zum Einbau in ein Fahrzeug des öffentlichen Personenverkehrs mit den Merkmalen aus dem Oberbegriff des Schutzanspruchs 1.

Schlebetritte werden verwendet, um Personen das Ein- und Ausstelgen in ein Fahrzeug des öffentlichen Personenverkehrs zu erleichtern. Sie weisen aus diesem Grund einen ein- und ausfahrbaren Ausschub mit einer belastbaren Trittplatte auf. Der Schiebetritt kann In einem Rahmen als Aufnahmevorrichtung angeordnet sein, welcher fest mit dem Fahrzeug verbunden ist. Bekannte Schiebetritte werden in einer horizontalen Lage unterhalb einer Tür eingebaut.

Problematisch ist die Verwendung der bekannten Schiebetritte, wenn sie in ein Fahrzeug eingebaut werden sollen, welches im Bereich der Tür eine geneigte, insbesondere von der Fahrzeugmitte zur Tür ansteigende Fußbodenfläche aufweist. Bereits ein leicht ansteigender Fahrzeugfußboden führt bei Verwendung eines horizontal montierten Schlebetritts dazu, dass sich ein zum Teil erheblicher Höhenunterschied zwischen der Trittplatte und der Trittleiste am Einstieg bedingt durch die erforderliche Einbautiefe des Schiebetritts ergibt. Dies erschwert insbesondere für Rollstuhlfahrer den Einstieg in das Fahrzeug.
Der in der WO 2005/030551 A2 offenbarte Schiebetritt ist um einen Winkel geneigt eingebaut und weist zwei zueinander geneigte Führungen auf. Die erste Führung ist an einem fahrzeugfesten Rahmen angeordnet. Die Trittplatte rollt mit Rollen an ihrer dem Fahrzeug zugewandten Seite In der ersten Führung ab. An ihrer vom Fahrzeug weg weisenden, ausfahrenden Seite weist die Ttittplatte selbst die zweite Führung auf, in der an einem fahrzeugfesten Rahmen angeordnete Rollen abrollen. Durch die zueinander geneigten Führungen ergibt sich eine bogenförmige Bewegungsbahn der Trittpiatte.

Ein um einen Winkel geneigter Einbau anderer bekannter Schiebetritte führt dazu, dass die Trittplatte nicht mehr horizontal verläuft, wodurch sich eine Gefährdung für die ein- und aussteigenden Personen ergibt.

Aus diesem Grunde weist die in der WO 2005/030551 A1 offenbarte Trittplatte einen Neigungsabschnitt auf, dessen Trittfläche um einen vorgegebenen Winkel geneigt Ist. Bedingt durch die Art der Führung der Trittplatte ist der Neigungsabschnitt jedoch nur in einem kleinen Bereich des Ausfahrweges horizontal, wodurch die Gefährdung für ein-und aussteigende Personen noch nicht vollständig abgestellt werden kann.

Es ist die Aufgabe der Erfindung, einen Schiebetritt für ein Fahrzeug bereitzustellen, in dem die Gefährung für ein- und aussteigende Personen weiter verringert ist.

Die Erfindung löst die Aufgabe mit den Merkmalen aus dem kennzeichnenden Teil des Schutzanspruchs 1.

In einer bevorzugten Ausgestaltung ist die Trittplatte starr mit dem Ausschub verbunden. Dadurch, dass keine Schwenk- oder Klappbew- gungen beim Ein- und Ausfahren des Ausschubs auftreten, wird der Verschleiß des Schiebetritt vermindert.

Der Ausschub kann durch ein oder zwei an einer bzw. beiden parallel zur Ausfahrrichtung liegenden Seiten des Rahmens angeordnete Antriebselemente, insbesondere durch Zahnriemenantriebe, angetrieben werden. Ebenfalls sind Ausgestaltungen möglich, bei denen die Antriebselemente mittig im Rahmen angeordnet sind.

Ferner kann der Ausschub an den beiden parallel zur Ausfahrrichtung liegenden Seiten eine oder mehrere Rollen aufweisen, welche mittels einer in Ausfahrrichtung verlaufenden und am Rahmen angeordneten Vertikalführung, insbesondere einem U-Profil, derart verschiebbar geführt werden, dass eine vertikale Verschiebung des Ausschubs verhindert wird. Somit wird eine sichere Führung des Ausschubs erreicht.

In funktionsgleicher Weise kann der Ausschub an den beiden parallel zur Ausfahrrichtung liegenden Seiten eine oder mehrere Gleitelemente aufweisen, welche mittels einer in Ausfahrrichtung verlaufenden und am Rahmen angeordneten Vertikalführung derart verschiebbar geführt werden, dass eine vertikale Verschiebung des Ausschubs verhindert wird.

Der Ausschub kann des Weiteren an den beiden parallel zur Ausfahrrichtung liegenden Seiten eine oder mehrere Rollen aufweisen, welche mittels einer in Ausfahrrichtung verlaufenden und am Rahmen angeordneten Seitenführung derart verschiebbar geführt werden, dass eine seitliche Verschiebung des Ausschubs verhindert wird.

In funktionsgleicher Weise kann der Ausschub an den beiden parallel zur Ausfahrrichtung liegenden Seiten eine oder mehrere Gleitelemente aufweisen, welche mittels einer in Ausfahrrichtung verlaufenden und am Rahmen angeordneten Seitenführung derart verschiebbar geführt werden, dass eine seitliche Verschiebung des Ausschubs verhindert wird.

In einer bevorzugten Ausgestaltung dient die Horizontal-Führung zugleich als Befestigungsvorrichtung zur Befestigung des Rahmens am Fahrzeug. Hierdurch wird der Platzbedarf des Schiebetritts verringert.

Für die Ein- und Ausfahrbewegung des Ausschubs kann der Schiebetritt einen bremsbaren Elektromotor aufweisen. Durch die Bremse ist es möglich, an beliebigen Positionen der Ein- und Ausfahrbewegung den Ausschub anzuhalten und zu arretieren, so dass variable Abstände zu den Haltestellen, z.B. zu den Bahnsteigen, berücksichtigt werden können.

Ein erfindungsgemäßes Fahrzeug des öffentlichen Personenverkehrs weist mindestens einen der bereits beschriebenen Schiebetritte auf, welche derart im Bereich unter der Tür angeordnet ist, dass die Ausfahrrichtung des Ausschubs parallel zur geneigten Fußbodenfläche liegt.

Vorzugsweise ist der Neigungsabschnitt um den im Wesentlichen gleichen Winkelbetrag bezüglich der Ausfahrbewegung geneigt, um den auch die Fußbodenfläche des Fahrzeugs bezüglich der Horizontalen geneigt ist. In der Regel treten Neigungen von bis zu 10° auf, wobei die Erfindung nicht auf diesen Bereich beschränkt ist. Ferner kann der Schiebetritt derart ausgestaltet und derart im Fahrzeug angeordnet sein, dass der Neigungsabschnitt in jeder Stellung während des Ein- und Ausfahrens des Ausschubs horizontal liegt.

Ein mögliches Ausführungsbeispiel der Erfindung ist in den Figuren 1 bis 6 dargestellt. Es zeigen:
- Fig. 1: einen Ausschnitt eines Fahrzeugs mit einem Schiebetritt in einer schematischen Darstellung;
- Fig. 2: einen Schiebetritt im ausgefahrenen Zustand in einer perspektivischen Darstellung;
- Fig. 3: den Schiebetritt aus Fig. 2 im eingefahrenen Zustand;
- Fig. 4: den Schiebetritt aus Fig. 3 in einer Draufsicht;
- Fig. 5: den Schiebetritt aus Fig. 4 in einer Frontansicht;
- Fig. 6: einen vergrößerten Ausschnitt des Schiebetritts aus Fig. 5 gemäß der Markierung A in Fig. 5.

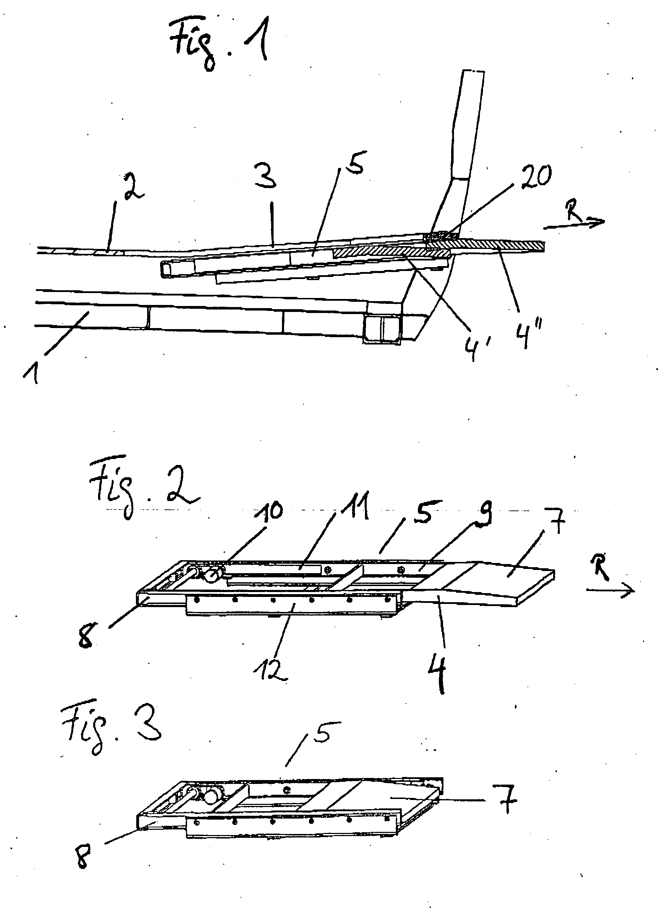

Die Fig. 1 zeigt in einer schematischen Darstellung die Anordnung des Schiebetritts 5 in einem Fahrzeug 1 mit einer nicht dargestellten Tür. Das Fahrzeug 1 weist im Innenraum einen Fußboden auf, welcher einen horizontalen Bereich 2 und einen um einen vorgegebenen Winkel geneigten Bereich 3 aufweist. Der Boden 3 endet in einem Türbereich mit einer Trittleiste 20. Unter dem geneigten Boden 3 ist der in die Ausfahrrichtung R ausfahrbare Schiebetritt 5 parallel zum Boden 3 angeordnet. Der Schiebetritt 5 umfasst eine Trittplatte 4, welche in Fig. 1 im eingefahrenen Zustand 4' und im ausgefahrenen Zustand 4" dargestellt ist. Es ist erkennbar, dass die Trittplatte 4 sowohl im eingefahren als auch im ausgefahrenen Zustand horizontal angeordnet ist. Im vollständig ausgefahrenen Zustand schließt die Trittplatte 4" annähernd bündig mit der Trittleiste 20 ab, so dass der Einstieg von Personen in das Fahrzeug 1 nicht behindert ist.

Die Fig. 2 und 3 zeigen den Schiebetritt 5 in einer perspektivischen Darstellung im ausgefahrenen bzw. im eingefahrenen Zustand. Er umfasst einen Rahmen 8, welcher über die beidseitig des Ausschubs 9 am Rahmen parallel zur Ausfahrrichtung R angeordneten Befestigungsvorrichtungen 12 mittels Schraubverbindungen an dem Fahrzeug 1 befestigt ist. In dem Rahmen 8 ist ein Ausschub 9 mit der Trittplatte 4 verschiebbar gelagert. Die Trittplatte 4 weist einen keilförmigen Neigungsabschnitt 7 auf, welcher um einen vorgegebenen Winkelbetrag bezüglich der Ausfahrrichtung R geneigt ist. Die Ausfahrbewegung wird von dem Elektromotor 10 über zwei beidseitig des Ausschubs am Rahmen angeordnete Zahnriemenantriebe 11 bewirkt.

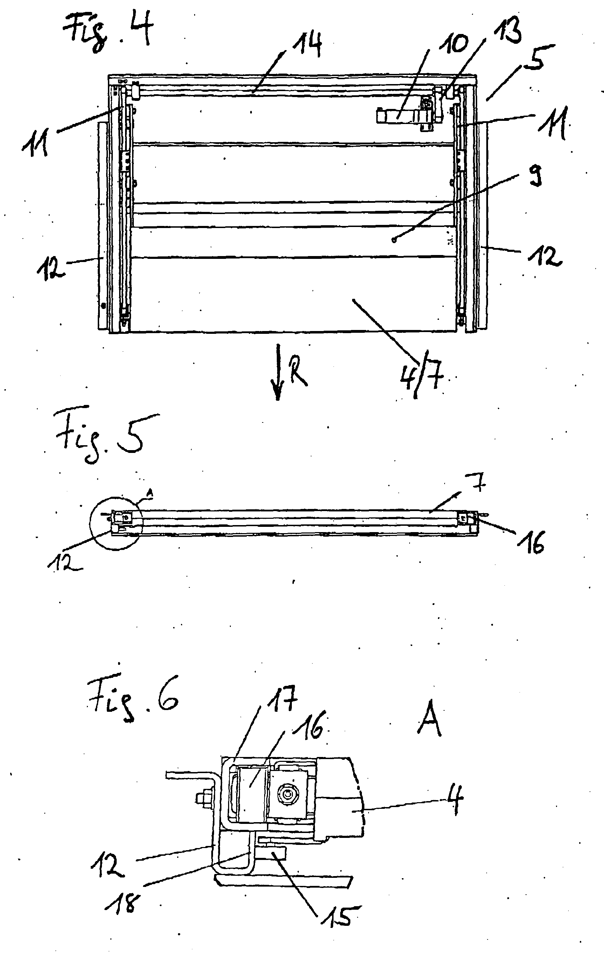

Die Fig. 4 zeigt den Schiebetritt 5 in der Draufsicht. Zu erkennen ist, dass der Elektromotor 10 über einen ersten Zahnriemenantrieb 13, über die Welle 14 und über zwei weitere Zahnriemenantriebe 11 die Aus- und Einfahrbewegung des Ausschubs 9 mit der starr am Ausschub 9 angeordneten Trittplatte 4 mit dem Neigungsabschnitt 7 bewirkt.

Die Fig. 5 zeigt den Schiebetritt 5 in der Frontansicht. Der in Fig. 5 mit A markierte Bereich ist in Fig. 6 vergrößert dargestellt, weiche die Führungsvorrichtungen des Schlebetritts verdeutlicht. Am Ausschub 9 15 mit der Trittplatte 4 sind auf beiden Seiten jeweils zwei Rollen 16 angeordnet, welche in einer als U-Profil ausgestalteten Vertikalführung 17 laufen. Die Vertikalführung 17 ist mit der Befestigungsvorrichtung 12 verschraubt. Unter den Rollen 16 sind um 90° gedrehte Laufrollejvx 15 angeordnet, welche von einer unterhalb der Vertikalführung 17 liegenden Seitenführung 18 geführt werden. Die Seitenführung 18 stellt einen Abschnitt der Befestigungsvorrichtung 12 dar. In funktionsgleicher Weise ist die seitliche Führung auch über eine Gleitführung realisierbar.

## Patentansprüche

1. Schiebetritt (5) zum Einbau in, ein Fahrzeug (1) des öffentlichen Personenverkehrs, das mindestens eine seitlich angeordnete Tür und eine im Bereich der Tür geneigte, insbesondere von der Fahrzeugmitte zur Tür ansteigende Fußbodenfläche (3) aufweist, wobei der Schiebetritt einen in einem fest mit dem Fahrzeug verbundenen Rahmen (8) geführten ein- und ausfahrbaren Ausschub (9) mit einer Trittplatte (4) aufweist, wobei die Trittplatte (4) einen Neigungsabschnitt (7) aufweist, dessen Trittfläche um einen vorgegeben Winkel bezüglich der Ausfahrrichtung (R) geneigt ist, **dadurch gekennzeichnet, dass** die Trittplatte derart im Bereich unter der Tür angeordnet ist, dass die Ausfahrrichtung (R) des Ausschubs (9) parallel zur geneigten Fußbodenfläche (3) liegt und der Schiebetritt (5) derart ausgestaltet und derart im Fahrzeug (1) angeordnet ist, dass der Neigungsabschnitt (7) in jeder Stellung während des Ein- und Ausfahrens des Ausschubs (9) horizontal liegt.

2. Schiebetritt (5) nach Anspruch 1, **dadurch gekennzeichnet, dass** die Trittplatte (4) starr mit dem Ausschub (9) verbunden ist.

3. Schiebetritt (5) nach einem der vorhergehenden Ansprüche, **dadurch gekennzeichnet, dass** der Ausschub (9) durch ein oder zwei an einer bzw. beiden parallel zur Ausfahrrichtung (R) liegenden Seiten des Rahmens angeordnete Antriebselemente, insbesondere durch Zahnriemenantriebe (11), angetrieben wird.

4. Schiebetritt (5) nach einem der vorhergehenden Ansprüche, **dadurch gekennzeichnet, dass** der Ausschub (9) an den beiden parallel zur Ausfahrrichtung (R) liegenden Seiten eine oder mehrere Rollen (16) aufweist, welche mittels einer in Ausfahrrichtung verlaufenden und am Rahmen (8) angeordneten Vertikalführung (17), insbesondere einem U-Profil, derart verschiebbar geführt werden, dass eine vertikale Verschiebung des Ausschubs (9) verhindert wird.

5. Schiebetritt (5) nach einem der vorhergehenden Ansprüche, **dadurch gekennzeichnet, dass** der Ausschub (9) an den beiden parallel zur Ausfahrrichtung (R) liegenden Seiten eine oder mehrere Gleitelemente aufweist, welche mittels einer in Ausfahrrichtung verlaufenden und am Rahmen (8) angeordneten Vertikalführung (17) derart verschiebbar geführt werden, dass eine vertikale Verschiebung des Ausschubs (9) verhindert wird.

6. Schiebetritt (5) nach einem der vorhergehenden Ansprüche, **dadurch gekennzeichnet, dass** der Ausschub (9) an den beiden parallel zur Ausfahrrichtung (R) liegenden Seiten eine oder mehrere Rollen (15) aufweist, welche mittels einer in Ausfahrrichtung verlaufenden und am Rahmen (8) angeordneten Seitenführung (18) derart verschiebbar geführt werden, dass eine seitliche Verschiebung des Ausschubs (9) verhindert wird.

7. Schiebetritt (5) nach einem der vorhergehenden Ansprüche, **dadurch gekennzeichnet, dass** der Ausschub (9) an den beiden parallel zur Ausfahrrichtung (R) liegenden Seiten eine oder mehrere Gleitelemente aufweist, welche mittels einer in Ausfahrrichtung verlaufenden und am Rahmen (8) angeordneten Seitenführung (18) derart verschiebbar geführt werden, dass eine seitliche Verschiebung des Ausschubs (9) verhindert wird.

8. Schiebetritt (5) nach Anspruch 6 oder 7, **dadurch gekennzeichnet, dass** die Seitenführung (18) als Befestigungsvorrichtung (12) zur Befestigung des Rahmens (8) am Fahrzeug (1) ausgestaltet ist.

9. Schiebetritt (5) nach einem der vorhergehenden Ansprüche, **dadurch gekennzeichnet, dass** er für die Ein- und Ausfahrbewegung des Ausschubs (9) einen bremsbaren Elektromotor (10) aufweist.

## Claims

1. Sliding step (5) for installation in a public transport vehicle (1), comprising at least one laterally disposed door and a floor surface (3) inclined in the area of the door and rising in particular from the vehicle centre towards the door, wherein the sliding step comprises a retractable and extendable extension (9) with a tread panel (4), the extension being guided in a frame (8) firmly connected to the vehicle, wherein the tread panel (4) comprises an inclined portion (7), the tread surface of which is inclined by a predetermined angle relative to the extension direction (R), **characterised in that** the tread panel is disposed in the area under the door in such a way that the extension direction (R) of the extension (9) is parallel to the inclined floor surface (3), and the sliding step (5) is configured and disposed in the vehicle (1) in such a way that the inclined portion (7) is horizontal in every position during the retraction and extension of the extension (9).

2. Sliding step (5) according to claim 1, **characterised in that** the tread panel (4) is rigidly connected to the extension (9).

3. Sliding step (5) according to any one of the preceding claims, **characterised in that** the extension (9) is driven by one or two driving members, in particular toothed belt drives (11), disposed on one or both sides, respectively, of the frame that lie parallel to the extension direction (R).

4. Sliding step (5) according to any one of the preceding claims, **characterised in that** the extension (9), on the two sides that lie parallel to the extension direction (R), comprises one or more rollers (16) which are guided, by means of a vertical guide (17), in particular a U-profile, which extends in the extension direction and is disposed on the frame (8), to be displaceable in such a way that a vertical displacement of the extension (9) is prevented.

5. Sliding step (5) according to any one of the preceding claims, **characterised in that** the extension (9), on the two sides that lie parallel to the extension direction (R), comprises one or more sliding members which are guided, by means of a vertical guide (17) which extends in the extension direction and is disposed on the frame (8), to be displaceable in such a way that a vertical displacement of the extension (9) is prevented.

6. Sliding step (5) according to any one of the preceding claims, **characterised in that** the extension (9), on the two sides that lie parallel to the extension direction (R), comprises one or more rollers (15) which are guided, by means of a lateral guide (18) which extends in the extension direction and is disposed on the frame (8), to be displaceable in such a way that a lateral displacement of the extension (9) is prevented.

7. Sliding step (5) according to any one of the preceding claims, **characterised in that** the extension (9), on the two sides that lie parallel to the extension direction (R), comprises one or more sliding members which are guided, by means of a lateral guide (18) which extends in the extension direction and is disposed on the frame (8), to be displaceable in such a way that a lateral displacement of the extension (9) is prevented.

8. Sliding step (5) according to claim 6 or 7, **characterised in that** the lateral guide (18) is configured as an attachment means (12) for attaching the frame (8) to the vehicle (1).

9. Sliding step (5) according to any one of the preceding claims, **characterised in that** it comprises an electric motor (10) that can be braked for the retracting and extending movement of the extension (9).

## Revendications

1. Marchepied coulissant (5) destiné à être intégré à un véhicule (1) de transport public de passagers qui présente au moins une porte disposée latéralement et une surface de plancher (3) inclinée au niveau de la porte, en particulier allant en montant depuis le milieu du véhicule vers la porte, ledit marchepied coulissant comprenant une extension (9) apte à être rentrée et sortie, guidée dans un cadre (8) solidaire dudit véhicule et ayant une planche de marchepied (4), ladite planche de marchepied (4) présentant une portion à inclinaison (7) dont la surface de marche est inclinée d'un angle donné par rapport à la direction de sortie (R), **caractérisé par le fait que** ladite planche de marchepied est disposée dans la zone au-dessous de la porte de telle manière que la direction de sortie (R) de ladite extension (9) est située parallèlement à la surface inclinée de plancher (3) et que le marchepied coulissant (5) est réalisé et disposé dans ledit véhicule (1) de manière à ce que ladite portion à inclinaison (7) soit située horizontalement dans chaque position durant la rentrée et la sortie de ladite extension (9).

2. Marchepied coulissant (5) selon la revendication 1, **caractérisé par le fait que** la planche de marchepied (4) est reliée de manière rigide à ladite extension (9).

3. Marchepied coulissant (5) selon l'une quelconque des revendications précédentes, **caractérisé par le fait que** ladite extension (9) est entraînée par un ou deux élément(s) d'entraînement, en particulier par des mécanismes d'entraînement à courroie crantée (11), disposé(s) d'un côté ou bien des deux côtés du cadre situé(s) parallèlement à la direction de sortie (R).

4. Marchepied coulissant (5) selon l'une quelconque des revendications précédentes, **caractérisé par le fait que** ladite extension (9) présente, des deux côtés situés parallèlement à la direction de sortie (R), un ou plusieurs rouleau(x) (16) qui sont guidés à coulissement au moyen d'un guide vertical (17), en particulier un profilé en U, s'étendant dans la direction de sortie et disposé sur ledit cadre (8), de telle sorte qu'un déplacement vertical de ladite extension (9) est empêché.

5. Marchepied coulissant (5) selon l'une quelconque des revendications précédentes, **caractérisé par le fait que** ladite extension (9) présente, des deux côtés situés parallèlement à la direction de sortie (R), un ou plusieurs élément(s) de glissement qui sont guidés à coulissement au moyen d'un guide vertical (17) s'étendant dans la direction de sortie et disposé sur ledit cadre (8), de manière à ce qu'un déplacement vertical de ladite extension (9) soit empêché.

6. Marchepied coulissant (5) selon l'une quelconque des revendications précédentes, **caractérisé par le fait que** ladite extension (9) présente, des deux côtés situés parallèlement à la direction de sortie (R), un ou plusieurs rouleau(x) (15) qui sont guidés à coulissement au moyen d'un guide latéral (18) s'étendant dans la direction de sortie et disposé sur ledit cadre (8), de telle sorte qu'un déplacement latéral de ladite extension (9) est empêché.

7. Marchepied coulissant (5) selon l'une quelconque des revendications précédentes, **caractérisé par le fait que** ladite extension (9) présente, des deux côtés situés parallèlement à la direction de sortie (R), un ou plusieurs élément(s) de glissement qui sont guidés à coulissement au moyen d'un guide latéral (17) s'étendant dans la direction de sortie et disposé sur ledit cadre (8), de manière à ce qu'un déplacement latéral de ladite extension (9) soit empêché.

8. Marchepied coulissant (5) selon la revendication 6 ou 7, **caractérisé par le fait que** ledit guide latéral (18) est conçu en tant que dispositif de fixation (12) servant à fixer ledit cadre (8) sur le véhicule (1).

9. Marchepied coulissant (5) selon l'une quelconque des revendications précédentes, **caractérisé par le fait que**, pour le mouvement de rentrée et de sortie de ladite extension (9), il comprend un moteur électrique (10) apte à être freiné.
